# EUROPEAN PATENT APPLICATION

(11) **EP 1 842 654 A2**
(43) Date of publication of application: **10.10.2007**
(21) Application number: 07105707.9
(22) Date of filing: 05.04.2007
(51) Int. Cl.: B29C 65/16, B29C 65/78

(54) **Laser welding jig and resin product**

(30) Priority: 07.04.2006 JP 2006106660
(71) Applicant: KABUSHIKI KAISHA TOKAI RIKA DENKI SEISAKUSHO, Niwa-gun, Aichi (JP)
(72) Inventor: Yuura, Takashi c/o K. K. Tokai Rika Denki Seisakusho, Aichi 480-0195 (JP); Komazawa, Shinichi c/o K. K. Tokai Rika Denki Seisakusho, Aichi 480-0195 (JP)
(74) Representative: Sherrard-Smith, Hugh

(57) **Abstract**

A laser welding jig for preventing resin extrusion and deformation when performing laser welding to join resin parts. The jig holds a first resin part (12) transmissible to laser light and a second resin part (13) that absorbs laser light. The first resin part is joined with the second resin part in a superimposed state. The jig is used to thermally weld the first resin part and the second resin part at a joint (12a, 13a) of the first and second resin parts. The jig includes a heat releasing means (117; 32; 44; 45; 23) arranged outward from the first resin part and the second resin part for absorbing and releasing heat generated by laser light at an outer side of the joint.

## Description

The present invention relates to a jig used for laser welding of two synthetic resin parts and a resin product formed by performing laser welding.

In recent years, laser welding has been performed to weld and join resin parts that combine to form part of a resin product. Laser welding locally heats a welded portion and reduces the effect of heat on internal components that may be retained in the resin products. Further, laser welding does not produce mechanical vibrations and thus does not generate resin particles. Due to such merits of laser welding, the applicants of the present application have considered laser welding when joining resin parts to form a portable device, which performs wireless communication with a vehicle to lock and unlock the doors of the vehicle. Japanese Laid-Open Patent Publication No. 2005-235837 (Fig. 7) describes such a portable device. The portable device typically includes a case formed by a first case part and a second case part. The case accommodates a circuit board including electronic components forming a communication circuit.

There is a trend for miniaturizing portable devices to improve portability. Miniaturization of the portable device has resulted in portions of the first and second case parts that are laser welded together from being located closer to the outer surface, or ornamental surface, of the portable device. Furthermore, it is also required that such welded portions of the first and second case parts be reduced in size.

However, the joint of the first and second case parts must be entirely welded together. As a result, the resin fused by a laser beam at the joint may be extruded onto the outer surface, or ornamental surface, of the case. This may reduce the aesthetic appeal of the case. Further, the welded portion that is fused and softened by a laser beam may cause deformation, such as buckling, near the joint. To provide the necessary aesthetic appeal and prevent deformation of the welded portions, the output of the laser beam may be reduced. However, this may result in insufficient welding strength.

The present invention provides a laser welding jig and a resin product that prevent resin extrusion and deformation when performing laser welding to join resin parts.

One aspect of the present invention is a laser welding jig for holding a first resin part transmissible to laser light and a second resin part that absorbs laser light, with the first resin part being joinable with the second resin part in a superimposed state. The laser welding jig is used to thermally weld the first resin part and the second resin part at a joint of the first and second resin parts. The laser welding jig includes a heat releasing means arranged outward from the first resin part and the second resin part for absorbing and releasing heat generated by laser light at an outer side of the joint.

A further aspect of the present invention is a resin product including a first resin part transmissible to laser light and a second resin part that absorbs Laser light. The first resin part is joined with the second resin part in a superimposed state, and the first resin part and the second resin part is joined with each other at a joint. The resin product includes a heat releasing means arranged outward from the first resin part and the second resin part for absorbing and releasing heat generated by laser light at an outer side of the joint.

The invention, together with objects and advantages thereof, may best be understood by reference to the following description of the presently preferred embodiments together with the accompanying drawings in which:
Fig. 1 is a cross-sectional view of a portable device;
Fig. 2 is a schematic diagram showing a laser welding device and a jig according to a first embodiment of the present invention;
Fig. 3A is an enlarged cross-sectional view showing the joint of a first case part and a second case part;
Fig. 3B is a heat distribution diagram of the joint;
Fig. 4 is a schematic diagram showing a laser welding device and a jig according to a second embodiment of the present invention;
Fig. 5 is an enlarged cross-sectional view showing the joint of a first case part and a second case part;
Figs. 6A to 6C are cross-sectional views each showing the joint of a first case part and a second part; and
Figs. 7A to 7C are cross-sectional views each showing tile joint of a first case part and a second part.

A portable device 11, which performs predetermined wireless communication with a certain communication subject, according to a first embodiment of the present invention will now be described.

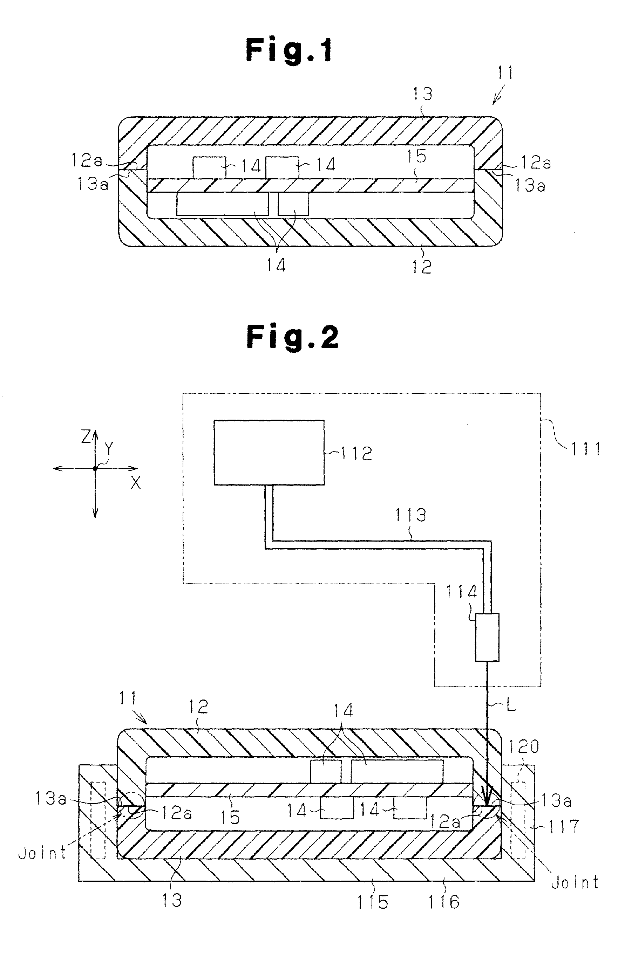

As viewed in Fig. 1, the portable device 11, which serves as a resin product, includes a first case part 12 and a second case part 13. The first case part 12 serves as a first resin part and has an open upper portion and a closed lower portion. The second case part 13 serves as a second resin part has an open lower portion and a closed upper portion. The lower portion of the second case part 13 is fixed to the first case part 12 so as to cover the open upper portion of the first case part 12. When assembled together, the first case part 12 and the second case part 13 form a box.

The first case part 12 is integrally injection molded from a synthetic resin. The open upper end surface of the first case part 12 defines a joined surface 12a, which is superimposed and joined with the second case part 13. A circuit board 15 is arranged in the first case part 12. Various types of electronic components 14 such as electronic devices of a microcomputer and a communication circuit are mounted on the circuit board 15. In this embodiment, the synthetic resin forming the first case part 12 is free from colorants so that the first case part 12 has the required transmittance with respect to laser light.

The second case part 13 is integrally injection molded from a synthetic resin. The open lower end surface of the second case part 13 defines a joined surface 13a, which is superimposed and joined with the first case part 12. The joined surface 13a of the second case part 13 and the joined surface 12a of the first case part 12 are thermally welded together in a state contacting each other. In this embodiment, a pigment having a predetermined color (e.g., carbon black) is added to the synthetic resin forming the second case part 13. The amount and dispersion of the added pigment is determined so that the second case part 13 has the necessary laser light absorbance to generate the required heat.

The synthetic resin used to form the first case part 12 and second case part 13 may be a non-crystalline resin, such as polystyrene, or a crystalline resin, such as polypropylene. In this embodiment, polycarbonate, which is a non-crystalline resin, is used.

A jig used when laser welding the first case part 12 and the second case part 13 will now be described.

First, a laser welding device 111 used to join the first case part 12 and the second case part 13 will briefly be described. In this embodiment, the laser welding device 111 is used to thermally weld and join the first case part 12 and the second case part 13. Referring to Fig. 2, the laser welding device 111 generates a laser beam L with a laser beam generator 112. The laser beam L travels through an optical fiber 113 and a converging lens 114. Then, the laser beam L is directed toward welded portions of two resin parts that are joined with each other. The laser beam source may be a known laser device used for such laser welding such as an yttrium aluminum garnet (YAG) laser. Further, the laser beam generator 112 is fixed to a housing (not shown) of the laser welding device 111. The converging lens 114 is driven by a driver (not shown) and is movable in an XYZ coordinate system in the directions of the X, Y, and Z axes.

The first case part 12 and the second case part 13 are held by a metal laser welding jig 115 at a position corresponding to the moving range of the converging lens 114. The laser welding jig 115, which is box-shaped, has a bottom wall 116 and side walls 117 extending from the four sides of the bottom wall 116. The side walls 117 function as a heat releasing means. The laser welding jig 115 accommodates the first case part 12 and the second case part 13 in a superimposed state. The closed side of the second case part 13 is held on the bottom wall 116 of the laser welding jig 115. The side walls 117 extend to a height above the joint (joined surfaces 12a and 13a) of the second case part 13 and the first case part 12. Thus, the side walls 117 surround the outer side of the joined surfaces 12a and 13a. The side walls 117 restrict movement of the joint of the first case part 12 and the second case part 13.

The laser welding device 111 drives and moves the converging lens 114 with the driver relative to the joint of the first case part 12 and the second case part 13 to direct the laser beam L toward the joint. This joins the first case part 12 and the second case part 13 at the joint. It is to be noted that the laser welding jig 115 may be moved instead of the laser welding device 111.

The joining of the first case part 12 and the second case part 13 is performed using the laser welding device 111 in the following manner. The first case part 12 is superimposed with the second case part 13 so that the joined surface 12a of the first case part 12 contacts the joined surface 13a of the second case part 13. In this state, the first case part 12 and the second case part 13 are supported by and fixed to the laser welding jig 115.

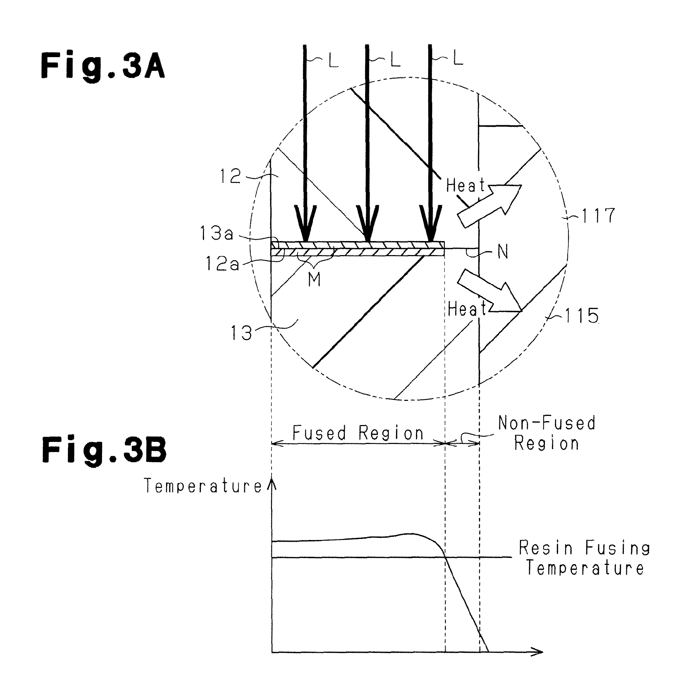

Referring to Fig. 2 and 3A, the laser beam L is directed from the converging lens 114 toward the second case part 13 through the first case part 12. The laser beam L propagates through the first case part 12 and reaches the open end surface of the second case part 13, or the joined surface 13a. The joined surface 13a of the second case part 13 absorbs the energy of the laser beam L at the joined surface 13a. This generates heat that fuses the joined surface 13a of the second case part 13 and the joined surface 12a of the first case part 12. The fusion forms a fused region M at the joined surfaces 12a and 13a.

In this embodiment, the side walls 117 of the laser welding jig 115 are arranged at the outer side of the joined surfaces 12a and 13a of the first case part 12 and the second case part 13, that is, at the outer side of the joint of the first case part 12 and the second case part 13. Thus, the heat at the joined surfaces 12a and 13a near the side walls 117, that is, the heat at the outer side of the joined surfaces 12a and 13a are absorbed and dissipated. The heat at the outer side of the joined surfaces 12a and 13a transmitted through the side walls 117 may be absorbed by the entire laser welding jig 115.

Fig. 3B shows the distribution of heat at the joined surfaces 12a and 13a when irradiated by the laser beam L. As shown in Fig. 3B, the temperature decreases at locations closer to the side walls 117 such that fusion does not occur in regions near the side walls 117. Thus, a non-fused region N is defined in the vicinity of the side walls 117 at the outer side of the joined surfaces 12a and 13a, that is in the vicinity of the ornamental surface of the portable device 11. The fused region M is spaced from the outer surface of the first case part 12 and the second case part 13 by a certain distance. The area of the non-fused region N varies in accordance with, for example, the thickness of the side walls 117, the size of the laser welding jig 115, and the thermal conductivity of the laser welding jig 115. The area of the non-fused region N and the area of the fused region M are determined such that the joining of the first case part 12 and the second case part 13 is ensured and excessive fusion does not occur at the joined surfaces 12a and 13a.

Subsequently, the fused region M is cooled and solidified. The fused region M entirely joins the periphery of the second case part 13 with the periphery of the first case part 12. However, the joined surfaces 12a and 13a of the first case part 12 and the second case part 13 may partially be connected to each other at a number of locations. In such a case, a heat releasing means need be arranged only at the outer side of the joined portions of the first case part 12 and the second case part 13.

When or after heating and fusing the joint with the laser beam L, pressure may be applied to the joint to further ensure the joining of the first case part 12 and the second case part 13. For example, the first case part 12 may be pressed toward the second case part 13 with a pressing means, such as a roller (not shown). In this case, the pressing means follows the movement of the converging lens 114. Further, the pressing means continues to apply pressure until the joint of the first case part 12 and the second case part 13 are cooled. Also, pressure may be applied to the vicinity of the portion irradiated by the laser beam L. This prevents the generation of voids (bubbles) in the joint of the first case part 2 and the second case part 13.

The first embodiment has the advantages described below.
(1) When the laser beam L strikes the second case part 13, the heat at the outer side of the joint (joined surfaces 12a and 13a) of the first case part 12 and the second case part 13, that is, the vicinity of the ornamental surface of the portable device 11, is absorbed and dissipated by the side walls 117. This decreases the heat at the joined surfaces 12a and 13a near the side walls 117 during the emission of the laser beam L and suppresses excessive fusion. Accordingly, even if the laser beam L is directed toward a position slightly deviated from the intended position or even if there is a variation in the output of the laser beam L during laser welding, the generation of heat near the side walls 117 is suppressed. This prevents the extrusion of fused resin onto the outer surface of the portable device 11. Further, even if welding is performed while applying pressure to the joined surfaces 12a and 13a, the joined surfaces 12a and 13a are partially not fused. This prevents deformation such as buckling from occurring at the vicinity of the joined surfaces 12a and 13a.
(2) The outer side of the joined surfaces 12a and 13a is covered by the side walls 117. This, even if the intensity of the laser beam L increases and enlarges the fused region M of the joined surfaces 12a and 13a, the first case part 12 and the second case part 13 are held so that their relative positions do not change. This prevents deformation such as buckling from occurring at the vicinity of the joined surfaces 12a and 13a even if the intensity of the laser beam L is increased. Thus, the laser welding strength is ensured.

A second embodiment of the present invention will now be described. The second embodiment differs from the first embodiment only in the structure of the heat releasing means. To avoid redundancy, like or same reference numerals are given to those components that are the same as the corresponding components of the first embodiment. Such components will not be described in detail.

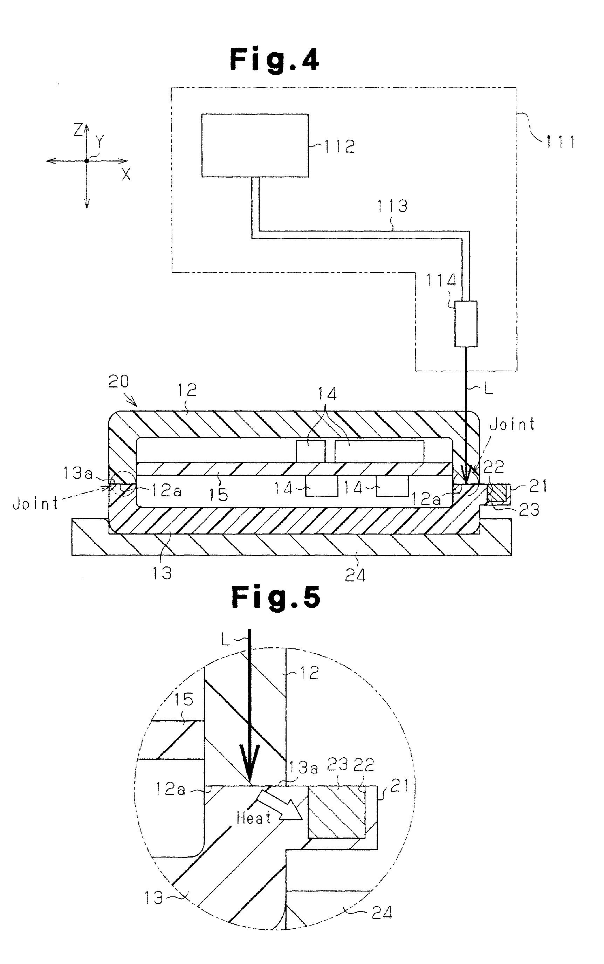

Referring to Fig. 4, a portable device 20, which serves as a resin product, includes a projection 21 extending outward from the second case part 13. A receptacle 22 is formed in the projection 21 to receive a metal shaft 23, which is an insert serving as a heat releasing means. The receptacle 22 may also receive other members, such as a metal pin or plate, in lieu of the shaft 23.

Laser welding is performed with the laser welding device 111 in a state in which the portable device 20 is fixed to a jig 24. The jig 24 is configured to securely hold the bottom portion of the second case part 13, as viewed in Fig. 4. The second case part 13 is fixed to the jig 24 so as to position the portable device 20 relative to the laser welding device 111.

Referring to Fig. 5, when the laser welding device 111 emits a laser beam L toward the portable device 20, the laser beam L propagates through the first case part 12 and reaches the joined surface 13a of the second case part 13. The joined surface 13a of the second case part 13 absorbs the energy of the laser beam L at the joined surface 13a. This generates heat that fuses the joined surface 13a of the second case part 13 and the joined surface 12a of the first case part 12. In this state, the heat at the outer side of the joined surfaces 12a and 13a is absorbed and dissipated by the shaft 23. This prevents excessive fusing of the joined surfaces 12a and 13a. Thus, fused resin is not extruded onto the outer surface (ornamental surface) of the portable device 20, and deformation such as buckling does not occur. Accordingly, even if the portable device 20 is held by the jig 24 that does not absorb the heat at the outer side of the joined surfaces 12a and 13a, the heat at the outer side of the joined surfaces 12a and 13a is dissipated and excessive fusion does not occur as long as the shaft 23 is arranged on the portable device 20.

The above embodiments may be modified as described below.

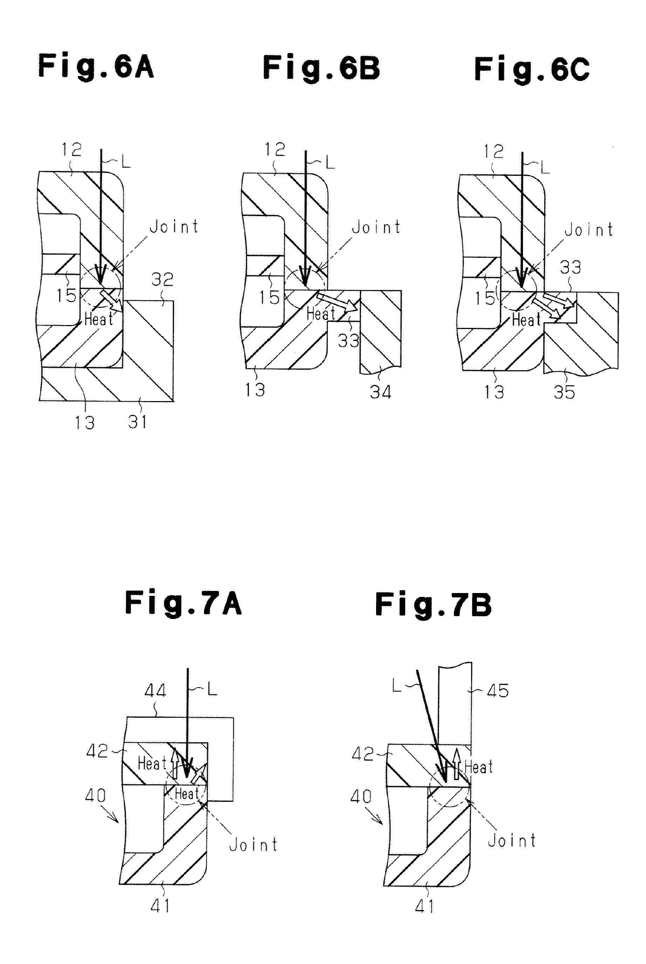

In the first embodiment, the side walls 117, which function as a heat releasing means, cover the outer side of the joint (joined surfaces 12a and 13a) of the first case part 12 and the second case part 13. However, the heat releasing means does not necessarily have to surround the outer side of the joint. For example, as shown in Fig. 6A, a laser welding jig 31 may have walls 32 serving as a heat releasing means that does not surround the joint. Further, as shown in Fig. 6B, when a projection 33 extends outward from the second case part 13, a laser welding jig 34 may hold the outer side of the projection 33 to serve as a heat releasing means. As shown in Fig. 6C, a laser welding jig 35 may hold the outer and lower sides of the projection 33 to serve as a heat releasing means. In each of these cases, the laser welding jigs 31, 34, and 35 absorb and dissipates the heat at the outer side of the joined surfaces 12a and 13a during the emission of the laser beam L.

In the above embodiments, the side walls 117 and the shaft 23, which serve as a heat releasing means, are formed from metal. However, the material of the side walls 117 and the shaft 23 is not limited to metal. Any material may be used as long as it has a high thermal conductivity so that heat generated by the laser beam L can be absorbed at the outer side of the joint of the first case part 12 and the second case part 13. For example, the side walls 117 and the shaft 23 may be formed from glass.

In the first embodiment, the laser welding jig 115 (i.e., side walls 117), which serves as the heat releasing means, holds the second case part 13, which serves as the second resin part. Instead, the laser welding jig 115 may hold the first case part 12, which serves as the first resin part. For example, as shown in Fig. 7A, a case 40 may include a container 41, which serves as a second resin part, and a lid 42, which serves as a first resin part. The container 41 is box-shaped and has an open upper end. The lid 42 closes the opening of the container 41. A glass piece 44 may be used to hold the case 40 in a state in which the container 41 is closed by the lid 42 during the emission of the laser beam L. The glass piece 44 has a peripheral portion that is bent downwards to surround the side surfaces of the lid 42, that is, to surround the outer side of the joint of the container 41 and the lid 42. In this structure, during the emission of the laser beam L, the glass piece 44 absorbs and dissipates the heat at the outer side of the joint of the container 41 and the lid 42.

Further, as shown in Fig. 7B, in a state in which the container 41 is closed by the lid 42, a pressing member 45 formed from a material having a high thermal conductivity such as metal or glass may be used to apply force from the lid 42 on the joint of the container 41 and the lid 42. The laser beam L is emitted diagonally so that there is no interference with the pressing member 45. In this case, the pressing member 45 absorbs and dissipates the heat at the outer side of the joint of the container 41 and the lid 42 during the emission of the laser beam L.

In the second embodiment, the shaft 23, which is an insert serving as a heat releasing means, is arranged on the second case part 13, which serves as a second resin part. However, an insert, which serves as a heat releasing means, may be arranged on the first case part 12, which serves as a first resin part. For example, the first case part 12 may have a projection similar to that of the second case part 13 in the second embodiment, and an insert may be arranged in the projection of the first case part 12. In this case, the heat at the outer side of the joined surfaces 12a and 13a during the laser beam emission would also be absorbed and dissipated by the insert. A shaft, or insert, may of course be arranged on both of the first case part 12 and the second case part 13.

In the first embodiment, the laser welding jig 115 (i.e., side walls 117) absorbs the heat at the outer side of the joined surfaces 12a and 13a. A cooling means for cooling the side walls 117 may also be used. For example, the side walls 117 may be cooled by a coolant (liquid) circulating through a water jacket 120 (refer to Fig. 2) formed in the side walls 117 or cooling air (gas) blasted against the side walls 117. In such a case, the cooled side walls 117 would efficiently absorb the heat at the outer side of the joint during the laser beam emission. In the second embodiment, a similar cooling means may be used to cool the shaft 23.

In the above embodiments, the present invention is embodied in the first case part 12 and second case part 13 of the portable devices 11 and 20. However, the present invention may be embodied in a case, which retains electronic components, for other electronic devices. For example, the present invention may be embodied in a portable terminal such as a cellular phone. Further, the present invention is not limited to a case that accommodates a component. The present invention may be applied to any product that is formed by joining two resin parts.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A laser welding jig for holding a first resin part (12) transmissible to laser light and a second resin part (13) that absorbs laser light, with the first resin part being joinable with the second resin part in a superimposed state, wherein the laser welding jig is used to thermally weld the first resin part and the second resin part at a joint (12a, 13a) of the first and second resin parts, the laser welding jig being **characterized by**:
a heat releasing means (117; 32; 44; 45; 23) arranged outward from the first resin part and the second resin part for absorbing and releasing heat generated by laser light at an outer side of the joint.

2. The laser welding jig according to claim 1, **characterized in that** the heat releasing means is a wall (117) surrounding the joint of the first resin part and the second resin part.

3. The laser welding jig according to claim 1, **characterized in that** the heat releasing means includes a wall (32; 44; 45) contacting the first resin part or the second resin part near the joint of the first resin part and the second resin part.

4. The laser welding jig according to any one of claims 1 to 3, **characterized in that** the heat releasing means includes an insert (23) arranged on the first resin part or the second resin part near the joint of the first and second resin parts.

5. The laser welding jig according to any one of claims 1 to 4, **characterized in that** the heat releasing means is made of metal.

6. The laser welding jig according to any one of claims 1 to 4, **characterized in that** the heat releasing means is made of glass.

7. The laser welding jig according to any one of claims 1 to 6, further being **characterized by**:
a cooling means (120) for cooling the heat releasing means.

8. A resin product including a first resin part (12) transmissible to laser light and a second resin part (13) that absorbs laser light, with the first resin part being joined with the second resin part in a superimposed state, and the first resin part and the second resin part being joined with each other at a joint (12a, 13a), the resin product being **characterized by**:
a heat releasing means (23) arranged outward from the first resin part and the second resin part for absorbing and releasing heat generated by laser light at an outer side of the joint.

9. The resin product according to claim 8, **characterized in that** at least one of the first resin part or the second resin part includes an outwardly extending projection (21), and the heat releasing means includes an insert (23) that is inserted into the projection.

10. The resin product according to claim 8 or 9, further being **characterized by**:
a cooling means for cooling the heat releasing means.
